# FASCICULE DE BREVET EUROPEEN

(11) **EP 2 156 229 B1**
(45) Date de publication et mention de la délivrance du brevet: **12.10.2011**
(21) Numéro de dépôt: 08805950.6
(22) Date de dépôt: 06.06.2008
(51) Int. Cl.: G02B 6/44

(54) **BOITIER DE RACCORDEMENT POUR FIBRES OPTIQUES MUNI DE MOYENS D'ETANCHEITE**
VERTEILERKASTEN FÜR GLASFASERN MIT DICHTUNGSMITTELN
JUNCTION BOX FOR OPTICAL FIBRES, INCLUDING SEALING MEANS

(30) Priorité: 07.06.2007 FR 0755561
(43) Date de publication de la demande: 24.02.2010
(73) Titulaire: Free, Paris 75008 (FR)
(72) Inventeur: FORTIER, Eric, F-77720 Aubepierre Ozouer le Repos (FR)
(74) Mandataire: Dupuis-Latour, Dominique
(86) Numéro de dépôt international: PCT/FR2008/051014
(87) Numéro de publication internationale: WO 2009/001012

(56) Documents cités:
- WO-A-95/06347
- DE-U1-202005 013 818
- JP-A- 2001 100 050
- US-A- 5 280 556
- US-A- 5 434 944
- US-A- 5 896 486
- US-B1- 6 215 939

## Description

L'invention concerne le raccordement des fibres optiques.

Elle s'applique en particulier, mais non exclusivement, au raccordement de fibres optiques dans des parties communes d'un ensemble d'habitations, par exemple un immeuble, notamment pour la fourniture de services de communication haut débit.

Le raccordement des fibres optiques est généralement effectué dans un boîtier.

Les fibres raccordées dans le boîtier proviennent de deux câbles à fibres optiques différents, par exemple appelés câble d'adduction et câble d'immeuble.

Pour faire pénétrer chaque câble dans ce boîtier, ce dernier comprend une ouverture ménagée dans une paroi du boîtier. Un organe d'étanchéité est interposé entre le câble et la paroi, dans l'ouverture.

Mais le diamètre du câble pénétrant dans le boîtier peut différer d'une situation à l'autre. Dans le cas où l'installateur ne dispose que d'un seul modèle d'organe, il obtiendra une étanchéité imparfaite si le câble présente un diamètre relativement petit par rapport au diamètre interne de l'organe d'étanchéité, ou un serrage exagéré de l'organe autour du câble sinon. Pour y pallier, l'installateur peut choisir de disposer de plusieurs modèles d'organes d'étanchéité, ce qui implique de gérer les stocks correspondants et de transporter en permanence les différents modèles d'organes susceptibles d'êtres utilisés.

Un but de l'invehtion est de faciliter la réalisation de l'étanchéité entre le câble et le boîtier.

L'invention s'applique à un boîtier de raccordement pour fibres optiques comprenant :
- une paroi présentant au moins une ouverture ;
- un organe présentant un orifice pour le passage d'un câble à fibre optique, l'organe étant apte à être reçu dans l'ouverture en assurant un contact avec la paroi, et
- des moyens de serrage de l'organe à distance de l'ouverture en vue d'assurer un contact avec le câble.

De tels boîtiers sont par exemple divulgués par les US 6 215 939 B1, US 5 280 556 A, JP 2001 100050 A et US 5 896 486 A.

Le boîtier présente une bonne étanchéité. En effet, le boîtier permet d'assurer localement, en deux endroits distincts, deux contacts d'une part, entre l'organe d'étanchéité et la paroi et, d'autre part, entre le câble et l'organe grâce aux moyens de serrage qui sollicitent l'organe autour du câble. De plus, un même organe peut recevoir des câbles présentant différents diamètres. En effet, les moyens de serrage distants de l'ouverture permettent d'adapter un même organe à différents diamètres de câbles sans affecter les contacts entre d'une part, l'organe et la paroi et d'autre part le câble et l'organe d'étanchéité.

Avantageusement, l'organe est en matière élastique, de préférence une matière thermoplastique, par exemple comprenant au moins une des matières du groupe constitué par un thermoplastique élastomère, un thermoplastique polyuréthane et un silicone.

Une telle matière pourra présenter, en plus d'un domaine de déformation élastique, un domaine de déformation plastique. L'organe est ainsi apte à réaliser des contacts présentant une très bonne étanchéité respectivement avec la paroi et le câble. De préférence, les matières élastiques choisies présentent une bonne résistance aux agressions liées à la température, à l'humidité ou à l'exposition au soleil. En outre, ces matières permettent éventuellement de thermo-souder l'organe au câble.

Selon l'invention, l'organe comprend un film d'étanchéité s'étendant dans l'orifice, le film étant non parallèle à un axe de l'orifice.

Le préambule de la revendication 1 correspond aux enseignements du US 6 215 939 B1 précité, et la partie caractérisante à ceux propres à l'invention. Les sous-revendications 2 à 5 visent des mises en oeuvre subsidiaires avantageuses, et la revendication 6 a pour objet un boîtier de raccordement pour fibres optiques incorporant l'organe d'étanchéité de l'invention.

Un tel film permet d'améliorer l'étanchéité du boîtier notamment entre le câble et l'organe. En effet, les moyens de serrage assure localement le contact entre le câble et l'argane sur une portion de serrage. Le film permet de combler un éventuel espace entre ce câble et cet organe hors de la portion de serrage. Ainsi, le câble et l'organe sont en contact par l'intermédiaire du film. Le film permet également d'adapter le diamètre du câble à celui de l'organe. En effet, le film rattrape les éventuelles différences de diamètre liées à la fabrication de l'organe et du câble et assure le contact entre le câble et l'organe.

Le film, préalablement à la première utilisation de l'organe, pourra être prédécoupé ou perforé en son centre afin de faciliter le passage du câble dans l'orifice.

L'invention sera mieux comprise à la lecture de la description qui va suivre, donnée uniquement à titre d'exemple non limitatif et faite en se référant aux dessins dans lesquels :
- la figure 1 est une représentation schématique d'un ensemble d'habitations: comprenant des boîtiers selon des premier et deuxième modes de réalisation de l'invention ;
- la figure 2 est une vue en perspective d'un ensemble de premier et deuxième boîtiers selon le premier mode de réalisation de l'invention montrant des ouvertures d'entrée et/ou de sorties d'un câble;
- la figure 3 est une vue en perspective de l'ensemble de la figure 2 montrant des moyens d'articulation ;
- la figure 4 est une vue en coupe selon le plan IV-IV de l'ensemble de la figure 2 dans lequel le deuxième boîtier est dépourvu de couvercle ;
- la figure 5 est un agrandissement de la zone V de la figure 4 ;
- la figure 6 est une vue d'un boîtier selon le premier mode de réalisation de l'invention démuni de son couvercle ;
- la figure 7 est une vue agrandie de la zone VII de la figure 6 ;
- la figure 8 est une vue en perspective du boîtier de la figure 6 comprenant deux cassettes en position ouverte ;
- la figure 9 est une vue en perspective de l'ensemble de la figure 4 en position ouverte ;
- la figure 10 est une autre vue en perspective de l'ensemble de la figure 6 montrant des moyens d'appui du câble;
- la figure 11 est une vue en perspective d'une partie amovible des moyens d'appui de la figure 10 ;
- la figure 12 est une vue en perspective d'un organe d'immobilisation de l'ensemble de la figure 10 ;
- la figure 13 est une vue en perspective d'une des cassettes de la figure 8 ;
- la figure 14 est une vue agrandie de la zone XIV de la figure 13 ;
- la figure 15 est une vue de dessus de la cassette de la figure 13 ;
- la figure 16 est une vue en perspective d'un support d'épissures représenté sur la figure 15;
- les figures 17 et 18 sont des vues latérale et de dessus du support de la figure 16;
- la figure 19 est une vue agrandie d'un détail de la figure 17 dans laquelle on a représenté des fibres optiques ;
- les figures 20 à 23 sont des vues analogues aux figures 16 à 19 illustrant une variante du support d'épissures ;
- la figure 24 est une autre vue en perspective du boîtier de la figure 8 montrant les ouvertures d'entrée et/ou de sorties du câble ;
- la figure 25 est une vue de face d'une partie de moyens de serrage du boîtier de la figure 24;
- la figure 26 est une vue en perspective d'un organe d'étanchéité du boîtier de la figure 24 ;
- la figure 27 est une vue agrandie d'une coupe de l'organe de la figure 26 ;
- la figure 28 est une vue en perspective d'un boîtier selon un deuxième mode de réalisation de l'invention ;
- la figure 29 est une vue agrandie de la zone XXIX de la figure 28 ;
- la figure 30 est une vue d'un coulisseau d'obturation d'un orifice d'entrée et/ou de sortie d'un câble du boîtier de la figure 28.

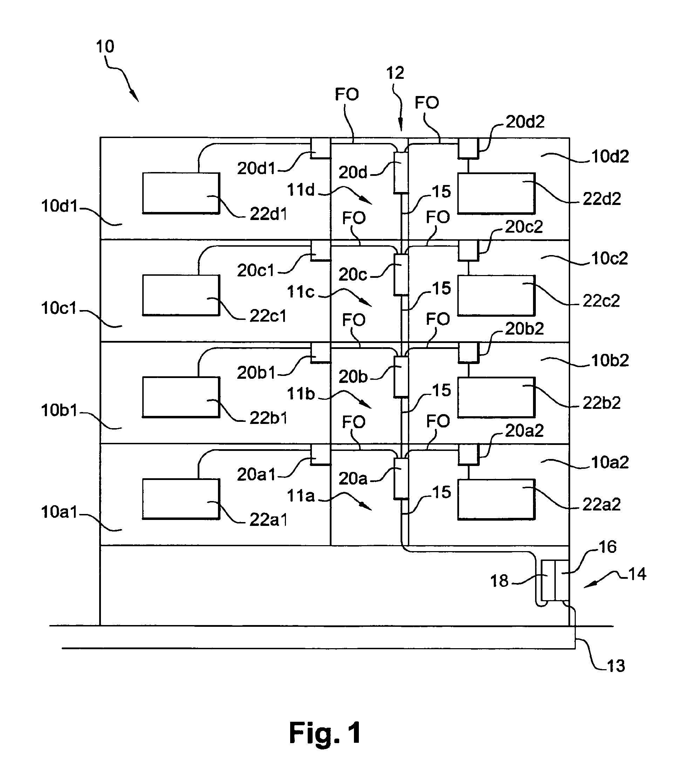

On a représenté sur la figure 1 un ensemble d'habitations désigné par la référence 10. L'ensemble d'habitations, en l'espèce un immeuble, comprend huit habitations séparées 10a1, 10a2, 10b1, 10b2, 10c1, 10c2, 10d1, 10d2 réparties sur quatre paliers 11a, 11b, 11c et 11d ainsi qu'un réseau 12 de fibres optiques reliant chaque habitation 10a, 10b, 10c et 10d à un câble à fibres optiques 13, dit d'adduction. Le câble d'adduction 13 comprend une pluralité de fibres optiques.

Le réseau 12 comprend un ensemble 14 de deux boîtiers identiques 16, 18, chacun conforme à un premier mode de réalisation de l'invention, dans lequel pénètre le câble 13. Chaque boîtier 16, 18 est appelé boîtier de pied d'immeuble. L'ensemble 14 permet de raccorder le câble d'adduction 13 à un autre câble à fibre optique dit câble d'immeuble 15 comprenant également une pluralité de fibres optiques. Le câble d'immeuble 15 relie les boîtiers 16, 18 à des boîtiers 20a-d disposés respectivement sur chaque palier 11a-d. Chaque boîtier 20a-d, appelé boîtier de palier, est conforme à un deuxième mode de réalisation de l'invention. Chaque boîtier 20a-d est respectivement relié, en l'espèce, à deux boîtiers d'habitation 20a1, 20a2, 20b1, 20b2, 20c1, 20c2, 20d1, 20d2 des habitations 10a1, 10a2, 10b1, 10b2, 10c1, 10c2, 10d1, 10d2 du palier correspondant par une fibre optique FO. En variante, chaque boîtier 20a-d pourra être relié à un ou plus de deux boîtiers d'habitation. Enfin, chaque boîtier d'habitation est respectivement relié à des moyens tels que des terminaux 22a1, 22a2, 22b1, 22b2, 22c1, 22c2, 22d1, 22d2. Ces terminaux peuvent comprendre par exemple des moyens de réception, de décodage et de traitement de signal haut débit ou très haut débit pour des applications de type internet, téléphonie, télévision etc. au sein de chaque habitation 10a1, 10a2, 10b1, 10b2, 10c1, 10c2, 10d1, 10d2.

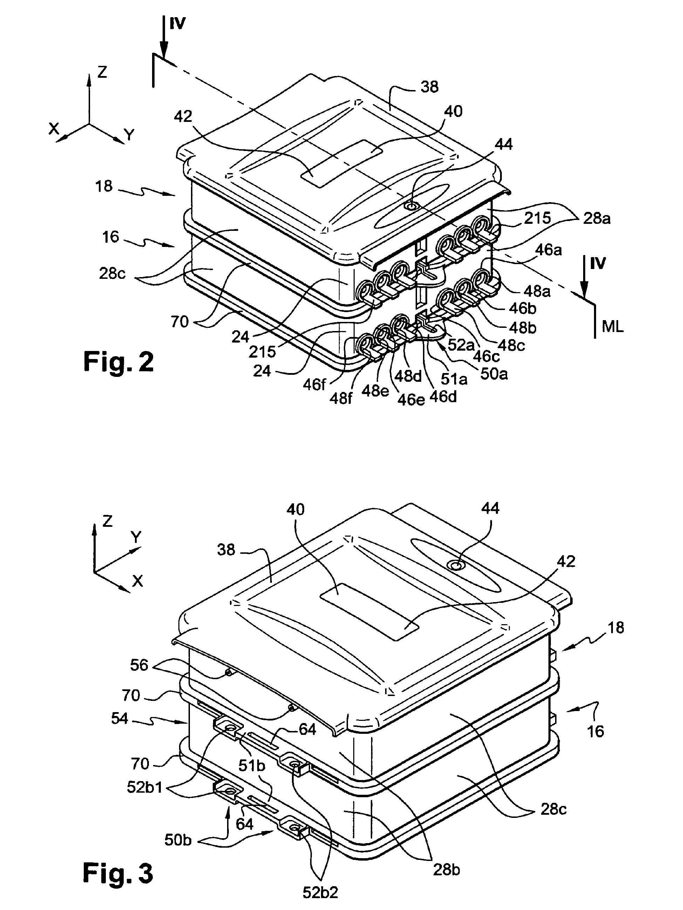

On a représenté sur les figures 2 à 4, 9 et 10 l'ensemble de boîtiers 14. Sur ces figures, on a représenté des axes X, Y, Z orthogonaux entre eux correspondant aux orientations longitudinale Y, transversale X et verticale Z du boîtier tel qu'illustré.

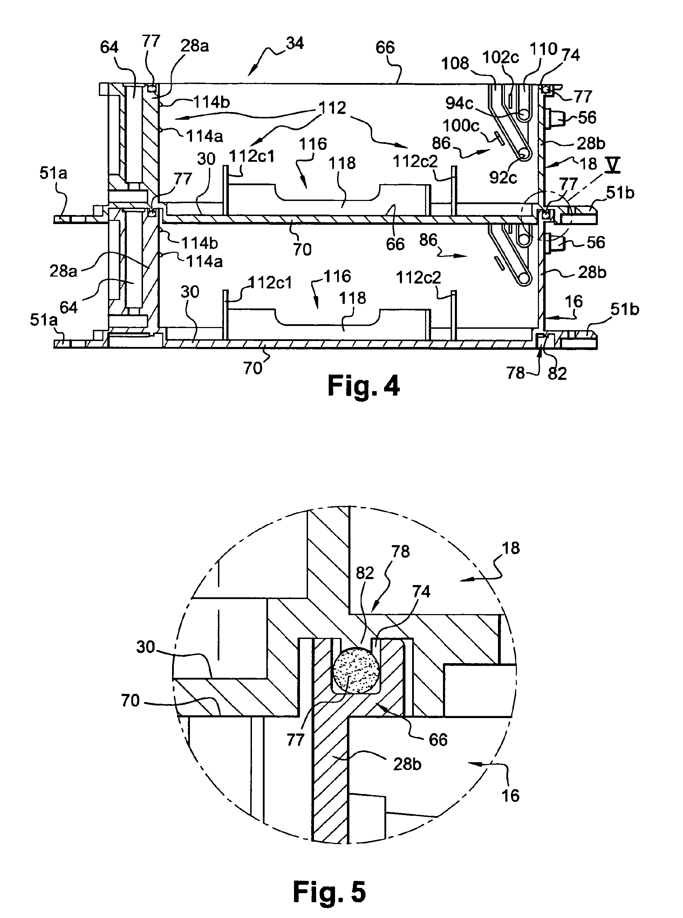

Chaque boîtier 16, 18 comprend un corps 24 délimité par quatre parois périphériques 28a-d. Les deux parois 28a, 28b sont parallèles au plan X,Z alors que les deux parois 28c, 28d sont parallèles au plan Y,Z. En référence aux figures 2 et 3, les parois 28a et 28b sont respectivement appelées parois avant 28a et arrière 28b. Toutefois, cette appellation, valable dans l'exemple représenté sur ces figures, n'est plus pertinente dans le cas où, par exemple, l'ensemble est dans une position verticale dans laquelle la paroi 28a serait en dessous de la paroi 28b. Chaque corps 24 est également délimité par un fond 30 parallèle au plan X,Y comme représenté sur les figures 4, 6 et 8. Les quatre parois 28a, 28b, 28c, 28d et le fond 30 de chaque boîtier lui donnent une forme générale parallélépipédique rectangle.

Les parois 28a-d délimitent, pour chaque boîtier 16, 18, une ouverture 34, visible sur les figures 4, 6 et 8. Sur les figures 2 et 3, l'ensemble 14 est représenté en position fermée dans laquelle l'ouverture 34 du premier boîtier 16 est obturée par le fond 30 du deuxième boîtier 18. L'ouverture 34 du deuxième boîtier 18 est, quant à elle, obturée par un couvercle 38. On désignera parfois dans la suite pour plus de simplicité le premier boîtier 16 comme boîtier inférieur et le deuxième boîtier 18 comme boîtier supérieur, et ce par référence aux figures. Il est entendu que les deux boîtiers peuvent être superposés avec leurs fonds verticaux et qu'on peut même envisager que le premier boîtier 16 soit en contact avec une face horizontale d'un support, par exemple le plafond d'un local, et se trouve ainsi au-dessus du deuxième boîtier 18.

Le couvercle 38 comprend une vitre transparente d'identification 40 du boîtier 18 recouvrant un espace d'identification 42 destiné à recevoir, par exemple, une étiquette. Un trou 44 pour une vis est ménagé dans le couvercle 38.

Comme représenté sur la figure 2, chaque paroi avant 28a comprend six ouvertures 46a-f d'entrée et/ou de sortie pour le passage d'un ou plusieurs câbles 13 à fibres optiques. Ces ouvertures sont agencés en deux groupes de trois ouvertures, ces groupes étant disposés de part et d'autre d'un plan longitudinal médian ML du boîtier, parallèle au plan Y,Z. Chaque ouverture présente une forme générale circulaire et reçoit un organe d'étanchéité 48a-f assurant un contact d'une part, avec la paroi 28a et, d'autre part, avec le câble 13.

En référence à la figure 3, chaque fond 30 comporte également des moyens de fixation 50a, 50b, s'étendant parallèlement au fond 30, respectivement à partir des parois avant 28a et arrière 28b, en sens opposés les uns des autres, vers l'extérieur du boîtier. Ces moyens de fixation 50a, 50b sont destinés à la fixation du boîtier sur un support, par exemple une paroi. Les moyens de fixation avant 50a comprennent une patte 51a à bord courbe présentant un orifice 52a. Les moyens de fixations arrière 50b comprennent une patte 51b de forme générale rectangulaire présentant deux orifices circulaires 52b1, 52b2 symétriques l'un de l'autre par rapport au plan ML. Chaque orifice 52a, 52b1, 52b2 permet, entre autres, le passage d'une vis pour la fixation du boîtier 16 sur le support.

Comme représenté sur la figure 3, chaque paroi arrière 28b comprend des moyens d'articulation 54 des boîtiers 16 et 18 l'un par rapport à l'autre. Ces moyens 54 comprennent deux plots 56 de forme générale cylindrique disposés symétriquement par rapport au plan ML et faisant saillie par rapport à la paroi 28b suivant la direction Y. Les moyens d'articulation 54 comprennent également la patte arrière 51 b. Les orifices circulaires 52b1, 52b2 permettent le passage des plots 56 correspondant de l'autre boîtier 16, 18.

On a représenté sur la figure 4 l'ensemble 14 sans le couvercle 38. Pour fixer les deux boîtiers 16, 18 sur le support, ceux-ci comprennent également un canal 64 ménagé dans chaque paroi avant 28a. Ce canal 64 présente une forme cylindrique et traverse la paroi 28a de chaque ouverture 34 parallèlement à ses faces principales jusqu'à chaque fond 30. L'ensemble 14 peut ainsi être fixé à un support au moyen d'une vis commune traversant les canaux coaxiaux 64 des deux boîtiers 16, 18.

En référence aux figures 4 et 5, chaque ouverture 34 est délimitée par un bord 66 alors que chaque fond comprend un bord 70. Comme représenté plus en détail sur la figure 5, chaque bord 66 d'ouverture présente une section en forme générale de « U » et comprend une gorge 74 dans laquelle est disposée un organe d'étanchéité 78, par exemple un joint à écrasement. Chaque bord 70 de fond comprend également une gorge 78 présentant également une section en forme générale de « U », inversée par rapport à celle du bord 66, cette section étant plus grande que la section de la gorge d'ouverture 74. Ainsi, la gorge de fond 78 peut recouvrir le bord d'ouverture 66. De plus, chaque gorge de fond 78 comprend une nervure 82 coopérant avec le joint à écrasement 77. Dans l'exemple représenté aux figures 4 et 5, le bord 66 du deuxième boîtier 18 n'étant pas recouvert par le couvercle 38, le joint 77 n'est pas écrasé.

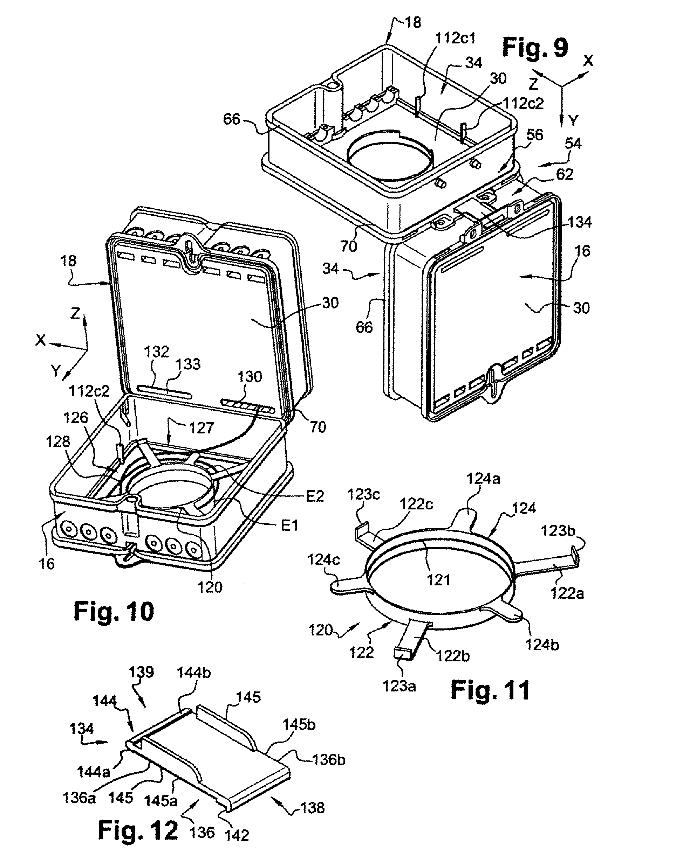

On a représenté sur les figures 9 et 10 l'ensemble 14 dans une position ouverte dans laquelle le boîtier 16 est ouvert. Les moyens d'articulation 54 sont agencés de façon que, dans cette position ouverte, les fonds 30 sont perpendiculaires l'un par rapport à l'autre et le bord 70 du fond 30 du deuxième boîtier 18 est en contact avec le bord 66 de l'ouverture 34 du premier boîtier 16. En l'espèce, la gorge de fond 78 du deuxième boîtier 18 recouvre latéralement le bord 66. Comme représenté sur les figures 3, 4 et 6, l'axe de chaque orifice 52b1, 52b2 est perpendiculaire et sécant avec l'axe de chaque plot 56 correspondant du même boîtier. Cela permet de loger les plots 56 du premier boîtier dans les orifices 52b1, 52b2 du deuxième par articulation des boîtiers 16 et 18 l'un par rapport à l'autre.

L'ensemble comprend des moyens d'immobilisation des boîtiers dans cette position relative où le premier boîtier est ouvert. En l'espèce, ces moyens comprennent entre les orifices 52b1, 52b2 de la patte arrière 51 b une fente 64 ménagée dans la patte 51 b et s'étendant parallèlement à la direction X. Les moyens d'immobilisation comprennent aussi un verrou 134 pouvant être reçu simultanément dans les fentes 64 des boîtiers 16 et 18. Comme représenté sur la figure 12, le verrou 134 comprend un corps 136 de forme générale plate rectangulaire, présentant deux faces principales 136a et 136b et deux bords opposés 138 et 139 chacun muni d'un relief 142 et 144. Le relief 142 fait saillie par rapport à la face 136a. Le relief 144 comprend d'une part, une partie 144a faisant saillie par rapport à la face 136a du même côté du corps que le relief 142 et d'autre part, une partie 144b faisant saillie par rapport à la face 136b du côté opposé à la partie 144a. La face 136b présente deux joues 145 perpendiculaires à la face 136a et disposées sur les bords 145a, 145b perpendiculaires aux bords 138, 139. Chaque joue 145 s'étend sur environ deux tiers de chaque bord 145a, 145b. La distance entre le bord 139 et chaque joue 145 est égale à l'épaisseur de la patte arrière 51 b de façon que ce bord soit maintenu entre le relief 144 et chaque joue 145.

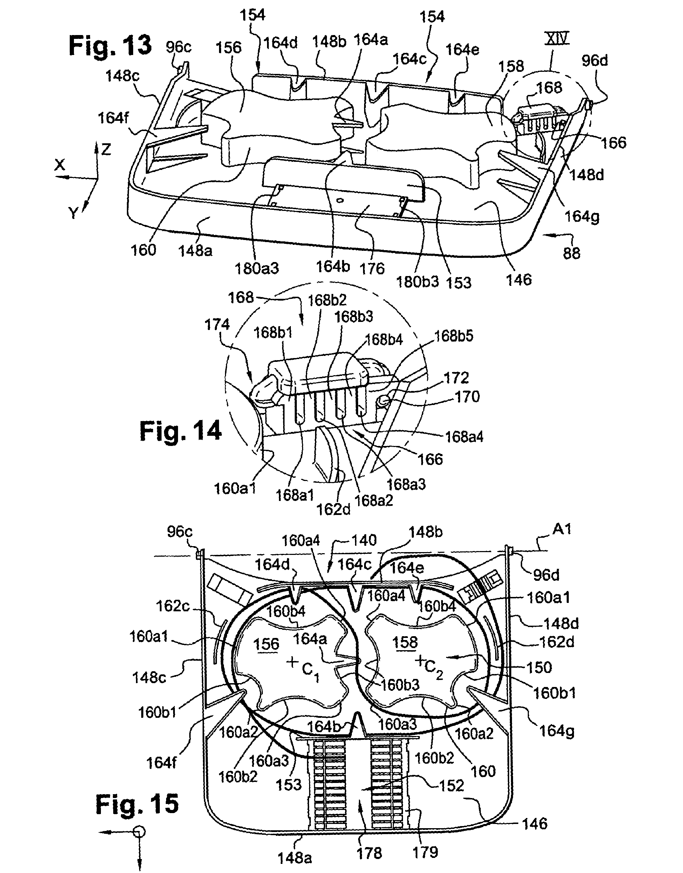

Chaque boîtier 16, 18 comprend également des moyens d'articulation 86 en rotation de deux cassettes 88, 90 pour la réception de fibres optiques. Ces cassettes 88, 90 seront décrites précisément plus bas en référence aux figures 13 à 15. Ces moyens d'articulation 86 comprennent deux paires 92, 94 de trous 92c, 92d et 94c, 94d, de forme générale circulaire, ménagés dans chacune des parois 28c et 28d, symétriquement par rapport au plan ML. Chaque paire 92 et 94 définit deux axes A1 et A2 de rotation des cassettes. Les trous 92c, 92d, 94c, 94d sont disposés dans la moitié du boîtier 16 opposée à celle comprenant les ouvertures 46a-f d'entrée et/ou de sortie. Chaque paire 92, 94 est apte à recevoir des moyens d'articulations complémentaires de chaque cassette 88, 90, en l'espèce une paire de doigts 96b, 96c comme cela est représenté sur les figures 13 et 15. Chaque trou 92c et 92d est disposé à mi-hauteur de chaque paroi 28c, 28d. Chaque trou 94c, 94d est disposé à mi-hauteur entre chaque trou 92c, 92d et le bord 66. Les paires 92, 94 sont alignées suivant une direction parallèle à la direction Z.

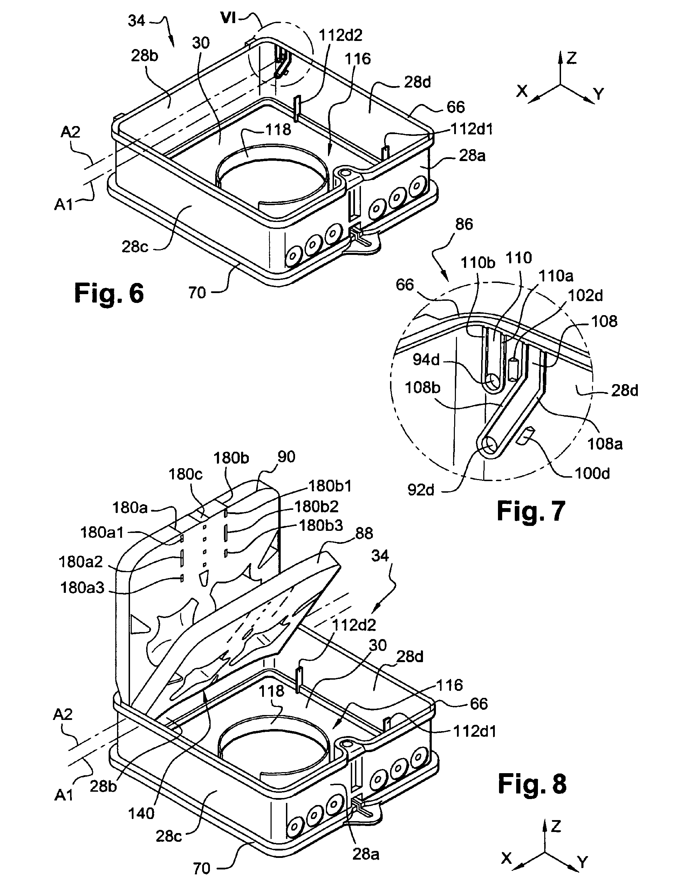

Comme représenté sur la figure 8, chaque cassette 88, 90 est mobile en rotation entre une position de fonctionnement et une position de maintenance par rapport au fond 30. Sur la figure 8, les cassettes 88, 90 sont représentées dans leur position de maintenance.

Dans la position de maintenance, la première cassette 88 forme un angle d'environ 50° avec le fond 30 et la deuxième cassette 90 forme un angle d'environ 90° avec le fond 30. Les première et deuxième cassettes 88, 90 sont respectivement maintenues dans leur position de maintenance par des moyens de maintien 100c, 100d et 102c, 102d, représentés plus en détail sur la figure 7. Ces moyens 100c, 100d et 102c, 102d sont disposés symétriquement par rapport au plan ML et comprennent des plots faisant saillie par rapport aux parois 28c, 28d. Les plots 100c, 100d sont orientés de façon à former un angle d'environ 50° avec le fond 30 alors que les plots 102c, 102d sont orientés de façon à former un angle d'environ 90° avec le fond 30. De plus, les moyens d'articulation 86 comprennent des moyens de guidage permettant de faire glisser les doigts 96, 98 respectivement du bord 66 jusqu'aux paires 92 et 94. Ces moyens de guidage comprennent chacun un canal 108, 110 délimité par deux bords 108a, 108b, 110a, 110b. Le canal 110 est rectiligne alors que le canal 108 présente un angle entre le bord 66 et chaque trou 92c, 92d.

En référence aux figures 4, 6 et 8, dans la position de fonctionnement, la cassette 88 prend appui sur des moyens d'appui 112. Ces moyens d'appui 112 comprennent deux paires de nervures 112c1, 112c2, 112d1, 112d2 de forme générale rectangulaire faisant chacune saillie respectivement par rapport à la face interne de chaque paroi 28c, 28d. Les nervures 112c1, 112d1 sont situées à environ un quart de la longueur du boîtier en partant de la paroi 28a. Les nervures 112c2, 112d2 sont, elles, situées à environ un quart de la longueur du boîtier en partant de la paroi 28b. Ces nervures 112c1, 112c2, 112d1, 112d2 s'étendent du fond 30 du boîtier 16 jusqu'à un tiers environ de la hauteur de chaque paroi 28a, 28d. Les moyens d'appui 112 comprennent également un couple de reliefs 114a-b permettant respectivement aux cassettes 88, 90 d'être maintenues en position fermée, notamment lorsque le boîtier 16 est fixé à une paroi verticale. Chaque relief 114a, 114b fait saillie par rapport à une partie arrondie de la face interne de la paroi 28a comprenant le canal 64. Le relief 114a est situé à environ deux tiers de la hauteur entre le fond 30 et le bord 66. Le relief 114b est situé à affleurement de l'ouverture 34. Dans cette position de maintenance, les cassettes 88, 90 donnent davantage accès qu'en position de fonctionnement à un compartiment 116 situé du côté du fond 30 par rapport à la cassette 88.

Comme illustré sur les figures 4, 6 et 8, ce compartiment 116 comprend une embase 118 de forme générale cylindrique, rigidement solidaire du fond 30, située sensiblement au centre du fond 30. Comme représenté également sur la figure 10, une entretoise amovible 120 est enfilée coaxialement sur l'embase 118. En référence à la figure 11, cette entretoise 120 comprend un corps 121 de forme générale cylindrique présentant deux bords inférieur 122 et supérieur 124. Le bord inférieur 122 est le bord de l'entretoise 120 le plus proche du fond 30. Le bord 122 porte trois pattes inférieures 122a-c faisant saillie radialement en s'éloignant de l'axe de la partie amovible et s'étendant perpendiculairement à son axe et parallèlement au fond 30. Ces trois pattes 122a-c sont angulairement disposés à 120° l'une par rapport à l'autre. Chaque patte 122a-c comprend, à son extrémité, un ergot 123-c, s'étendant sensiblement parallèlement à la direction Z. Les pattes 122a et 122b sont environ deux fois plus longues radialement que la patte 122c. Le bord supérieur 124 porte trois pattes supérieures 124a-c faisant saillie radialement en s'éloignant de l'axe de l'entretoise et s'étendant sensiblement parallèlement au fond 30. Ces trois pattes 124a-c sont radialement de même longueur que la patte inférieure 122c. Elles sont angulairement disposés à 120° l'une par rapport à l'autre, et décalées respectivement de 60° par rapport aux pattes inférieures 122a-c. L'entretoise amovible 120 est maintenue sur l'embase 118 par la cassette 88 lorsque celle-ci est dans sa position de fonctionnement.

L'entretoise 120 et l'embase 118 forment des moyens d'appui 126 définissant deux espaces de stockage E1 et E2 séparés l'un de l'autre par les pattes inférieures 122a-c qui forment des moyens de séparation 127 des deux espaces E1 et E2. L'espace E1 est délimité par le fond 30 et les pattes inférieures 122a-c alors que l'espace E2 est délimité par les pattes inférieures 122a-c et les pattes supérieures 124a, 124b, 124c. Ces moyens 126 permettent l'appui de spires 128 du câble 13. Les moyens 126 définissent des rayons de courbure minimal et maximal des spires 128. Le corps 121 définit le rayon de courbure minimal de E2 alors que les parois 28c, 28d définissent le rayon de courbure maximal de E1. L'embase 118 définit le rayon de courbure minimal de E1 alors que les ergots 123a-c définissent le rayon de courbure maximal de E2.

L'espace E2 permet généralement l'appui d'un câble dont les fibres sont destinées à être raccordées sur une cassette du boîtier supérieur 18 alors que l'espace E1 permet l'appui d'un câble dont les fibres sont destinées à être raccordées sur une cassette du boîtier inférieur 16, comme cela est représenté sur la figure 11. En variante, ces fonctions des espaces E1 et E2 peuvent être interverties.

Pour permettre le passage du câble du boîtier inférieur 16 au boîtier supérieur 18, le fond 30 de ce dernier présente un orifice de passage 130. Cet orifice présente une forme générale oblongue et s'étend dans la moitié du fond 30 la plus proche du bord 70 du deuxième boîtier 18 en contact avec le bord 66 de l'ouverture 34 du boîtier 16 en position ouverte. L'orifice 130 s'étend sur un peu moins de la moitié de la largeur transversale du fond 30. Un autre orifice 132, symétrique de l'orifice 130 par rapport au plan ML, est ménagé dans le fond 30. Dans l'exemple représenté sur la figure 10, l'orifice 132 est obturé par un opercule sécable 133.

On a représenté sur les figures 13 et 15, une cassette 88, identique à la cassette 90. Cette cassette 88 présente une forme générale rectangulaire et comprend un fond 146 à partir duquel des parois 148a-d font saillies perpendiculairement au fond 146. Chaque paroi 148a-d s'étend respectivement en regard de chaque paroi 28a-d. Chaque paroi 148c, 148d présente à son extrémité opposée à la paroi 148a, le doigt 96c, 96d. Les doigts 96c, 96d définissent un axe de rotation de la cassette 88 confondu avec l'axe de rotation A1 défini par les trous 92c, 92d. La paroi 148d est en retrait de cet axe de rotation de sorte que, lorsque la cassette est montée sur le boîtier 16 comme cela représentée sur la figure 8, une ouverture 140 est ménagée entre la cassette et la paroi 28b. L'axe de rotation A1 de la cassette intercepte cette ouverture 140 et l'orifice 130 est situé au droit de cette ouverture 140.

La cassette 88 comprend deux zones 150 et 152 séparées l'une de l'autre par une paroi 153 faisant saillie par rapport au fond 146 et s'étendant selon la direction Z. La paroi 153 est sensiblement parallèle au plan X, Z et est située à environ mi-chemin entre les paroi 148a et 148b. La zone 150 comprend des moyens de guidage 154 d'au moins une fibre, notamment agencés pour donner à la fibre un rayon de courbure supérieur à un rayon de courbure prédéterminé, en deçà duquel la transmission du signal pourrait être dégradée. Ces moyens sont agencés pour permettre de disposer la ou chaque fibre de sorte que son sens d'enroulement change le long de la fibre et/ou de sorte que la fibre se croise au moins une fois, et/ou au moins deux spires de la fibre s'étendent côte à côte. En l'espèce, les moyens de guidage 154 comprennent deux tambours 156 et 158 disposés symétriquement l'un de l'autre par rapport au plan ML. Chaque tambour 156 et 158 comprend des parois 160 faisant saillie par rapport au fond 146 et s'étendant selon la direction Z. Les parois 160 sont disposés autour d'un centre C1, C2 du tambour 156, 158 et consistent en une alternance de quatre parois convexes 160a1-4 et de quatre parois concaves 160b1-4 autour du centre C1, C2. Les parois concaves 160b1, 160b2, 160b4 du tambour 156 sont respectivement en regard des parois 148c, 148a, 148b. Les parois concaves 160b1, 160b2, 160b4 du tambour 158 sont respectivement en regard des parois 148d, 148a, 148c. Les parois 160b3 des tambours 156 et 158 sont en regard l'une de l'autre. Les parois convexes 160a1-4 sont dirigées vers les quatre coins de la cassette 88.

Les moyens de guidage 154 comprennent également deux parois 162c et 162d faisant saillie par rapport au fond 146, disposées symétriquement l'un de l'autre par rapport au plan ML et présentant chacune une forme d'arc. Le centre de courbure de chaque paroi 162c, 162d est situé du côté du centre du boîtier 16. Chaque paroi 162c, 162d est agencée respectivement entre chaque paroi 148c, 148d et chaque tambour 156, 158.

De plus, les moyens de guidage 154 comprennent des moyens de guidage vertical d'une fibre optique. Ces moyens de guidage comprennent des pattes 164 présentant une forme générale de pointe s'étendant sensiblement parallèlement au fond 146 de la cassette 88. Une patte 164a s'étend à partir de la paroi 160b3 du tambour 156 vers le tambour 158 sans toucher celui-ci, la flèche pointant vers le tambour 158. Une patte 164b s'étend à partir de la paroi 153, au milieu de celle-ci suivant la direction X, en direction de la paroi 148b, la flèche pointant vers cette paroi 148b. Une patte 164c s'étend à partir de la paroi 148b, au milieu de celle-ci suivant la direction X, en direction de la paroi 153, la flèche pointant vers cette paroi 153. Deux autres pattes 164d et 164e, situées de part et d'autre de la patte 164c, symétriquement par rapport au plan ML, s'étendent de façon analogue à cette patte 164c et présentent des dimensions homothétiquement réduites. Enfin, des pattes 164f et 164g, disposés symétriquement l'une de l'autre par rapport au plan ML, s'étendent respectivement suivant la direction Y à partir du milieu des parois 148c et 148d, en direction des parois 160b1, la flèche pointant vers ces parois 160b1.

En référence à la figure 14, la zone 150 comprend aussi deux peignes 166 pour le maintien des fibres optiques, muni chacun d'un contre-peigne 168 mobile par rapport au peigne 166 pour obturer celui-ci. Les peignes 166 sont disposés symétriquement l'un de l'autre par rapport au plan ML, entre les parois 162c, 162d et les parois 148b, 148c, 148d. Chaque peigne 166 s'étend depuis le voisinage du coin correspondant du boîtier 16 en direction de chaque tambour 156, 158. En l'espèce et comme représenté en détail à la figure 14, chaque peigne 166 comprend quatre creux 168a1-4 alternant avec trois dents 168b2-4, et deux extrémités 168b1 et 168b5 du peigne. Le contre-peigne 168 est monté mobile en rotation autour d'un arbre 170 reçu dans un logement 172 ménagé dans l'extrémité 168b5. Le contre-peigne 168 est verrouillé dans une position d'obturation des creux 168a1-4 grâce à des moyens de verrouillage élastiques classiques 174 formant clip ménagés dans l'extrémité 168b1 et sur le contre peigne 168 à l'opposé de l'axe 170.

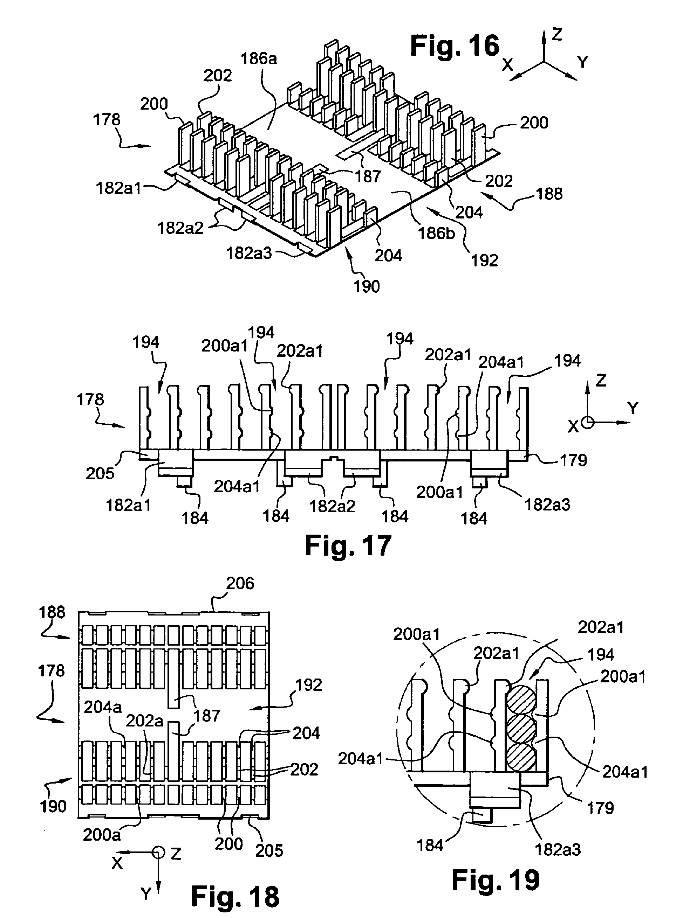

La zone 152 de la cassette 88 comprend un logement 176 pour un support d'épissures 178 amovible. Ce logement 176 a une forme rectangulaire correspondant à la forme générale d'une embase 179 du support d'épissures 178. Comme représenté aux figures 8 et 13, la zone 152 comprend des orifices 180 disposés en trois lignes parallèles à la direction Y lorsque la cassette 88 est dans la position fermée. Deux lignes 180a, 180b sont disposées de part et d'autre du plan ML. Chaque ligne 180a, 180b comprend respectivement trois orifices 180a1-3, 180b1-3 permettant de loger des clips 182a1-3, 182b1-3 du support d'épissures 178, visibles sur la figure 17. Une ligne 180c permet également de loger des plots de centrage 184 du support 178.

Comme représenté sur les figures 16 à 19, le support d'épissures 178 comprend deux parties 186a et 186b sécables l'une par rapport à l'autre et délimitées par des fentes 187 ménagée dans le support 178. Le support d'épissures 178 comprend deux zones de maintien 188, 190 des fibres optiques de part et d'autre d'une zone d'épissure 192, chaque zone de maintien 188, 190 présentant plusieurs canaux 194 de guidage délimités chacun par plusieurs couples de plots et débouchant sur la zone d'épissure 192.

En l'espèce et comme représenté sur les figures 16 et 18, chaque canal 194 est délimité par des premier, deuxième et troisième couples de plots, respectivement référencés 200, 202 et 204 et alignés suivant la direction X en partant des bords 205, 206 de l'embase 179 parallèles à la direction Y vers la zone de d'épissure 192. Un premier plot 200a de maintien du premier couple 200 comporte un relief 200a1 positionné à environ deux tiers de la hauteur du plot 200a par rapport à l'embase 179 et pointant vers l'intérieur du canal. Un deuxième plot 202a de maintien du deuxième couple 202 associé au même canal 194, comporte un relief 202a1, positionné au sommet du plot 202a, ce deuxième plot de maintien 202a étant disposé d'un côté du canal 194 opposé à celui du premier plot 200a. Le relief 202a1 pointe également vers l'intérieur du canal 194. Un troisième plot 204a de maintien du troisième couple 204 comporte un relief 204a1 de maintien. Le relief 204a1 de maintien est disposé du même côté du canal 194 que celui du premier plot 200a. Le plot 204 présente une hauteur égale à environ un tiers de la hauteur des plots 200a et 202a. Le relief 204a1 est disposé au sommet du plot 204 et pointe vers l'intérieur du canal 194. On remarquera que selon que les plots sont disposés sur la partie 186a ou 186b du support 178, les reliefs ne sont pas orientés de la même façon. En effet, sur la partie 186a désignée comme étant la plus proche de la paroi 153, illustrée sur les figures 13 et 15, les reliefs 200a1, 204a1 pointent vers la paroi 153 alors que les reliefs 202a1 pointent en direction opposée à la paroi 153. Sur la partie 186b désignée comme étant la plus éloignée de la paroi 153 sur la figure 15, les reliefs 200a1, 204a1 pointent en direction opposée à la paroi 153 alors que les reliefs 202a1 pointent vers la paroi 153.

On remarquera que d'une manière générale chaque canal de guidage 194 comporte au moins deux reliefs de maintien de chaque fibre FO. Les reliefs diffèrent l'un de l'autre deux à deux, par les paramètres suivants : leur hauteur par rapport à l'embase du support, le côté du canal où ils se situent, et le couple de plots qui les portent. Ces plots et reliefs permettent de maintenir jusqu'à trois fibres FO dans le même canal, indépendamment les une des autres au-dessus les unes des autres et parallèlement les unes aux autres, comme cela est représenté sur la figure 19. On notera, de plus, que le support 178 est destiné à recevoir des épissures par fusion.

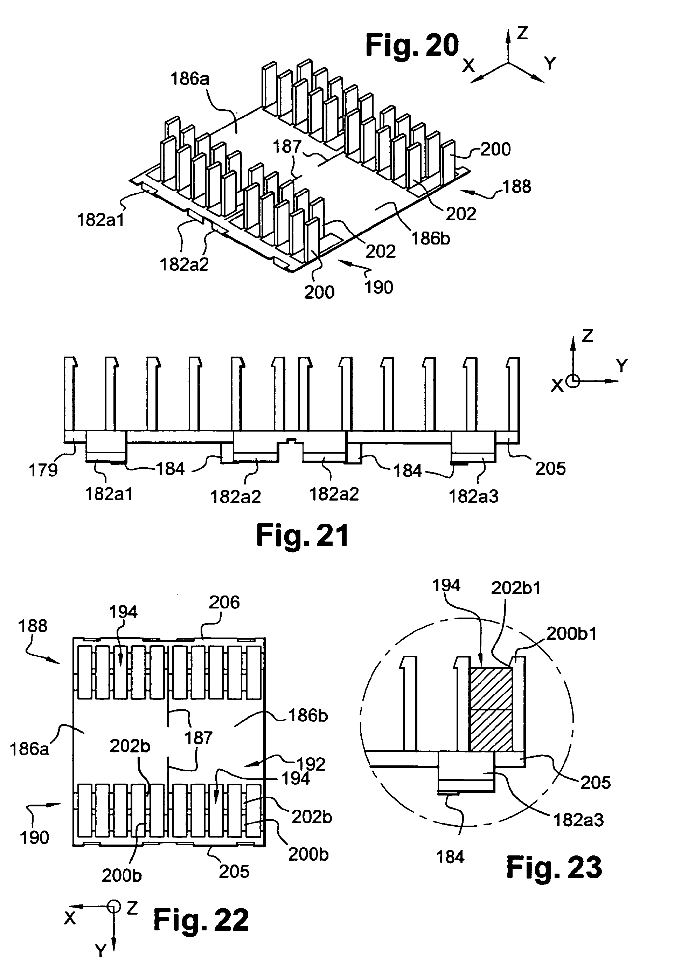

En variante et comme représenté sur les figures 20 à 23, le support 178 peut recevoir des épissures mécaniques. Dans ce cas, chaque canal 194 est délimité par des premier et deuxième couples de plots, respectivement référencés 200, 202 alignés suivant la direction X en partant des bords 205, 206 de l'embase 179 vers la zone de d'épissure 192. Un premier plot 200b de maintien du premier couple 200 comporte un relief 200b1 positionné au sommet du plot 200b et pointant vers l'intérieur du canal 194. Un deuxième plot 202b de maintien du deuxième couple 202 associé au même canal 194, comporte un relief 202b1, positionné au sommet du plot 202b, ce deuxième plot de maintien 202a étant disposé d'un même côté du canal 194 que celui du premier plot 200b. Le relief 202b1 pointe également vers l'intérieur du canal 194. Les plots 200b et 202b présente des hauteurs égales. On remarquera que les plots, qu'ils soient disposés sur la partie 186a ou 186b du support 178, présentent des reliefs tous orientés de la même façon, en l'espèce vers la paroi 153. Dans cette variante, les plots et reliefs permettent de maintenir jusqu'à deux fibres dans le même canal.

Le support étant sécable, il est possible d'associer deux parties 186a et 186b appartenant à deux variantes différentes du support 178 selon que l'on a besoin de réaliser des épissures uniquement par fusion, uniquement mécaniques, ou les deux à la fois.

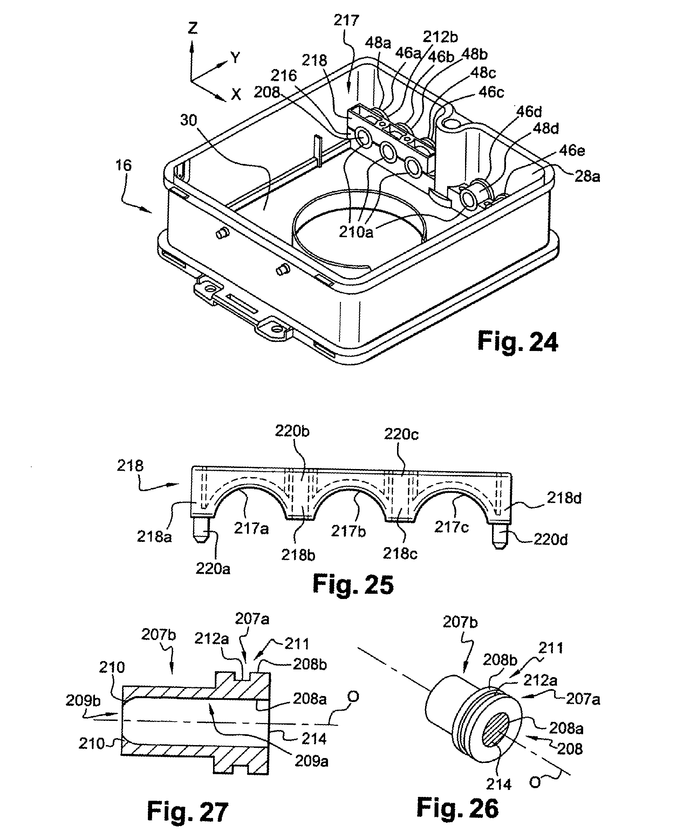

On a représenté sur la figure 24 le boîtier 16 dans lequel chaque ouverture 46a, 46b, 46c, 46d d'entrée et/ou de sortie reçoit un organe d'étanchéité correspondant 48a-d conforme à la figure 26. Chaque organe est en matière élastique, de préférence une matière thermoplastique, par exemple comprenant au moins une des matières du groupe constitué par un thermoplastique élastomère (TPE), un thermoplastique polyuréthane (TPU) et un silicone. Sur cette figure 26, l'organe 48a-d est à symétrie de révolution autour d'un axe O et comprend deux portions 207a et 207b, se faisant suite le long de l'axe O, situées à des emplacements différentes et présentant des sections externes différentes. La portion 207a de section la plus grande est prolongée par la portion 207b de forme générale cylindrique de section plus petite. Comme représenté sur la figure 24, la portion 207a est la portion en contact avec la paroi 28a. En l'espèce, le rayon externe de la portion 207b est plus petit que le rayon externe de la partie 207a.

Les organes 48a-d présentent un orifice 208 pour le passage du câble 13, 15 . Cet orifice 208 est délimité par une surface interne 208a et présente une section transversale à l'axe O non constante le long de cet axe. En référence à la figure 27, l'organe comprend deux portions 209a et 209b situées à des emplacements différents et présentant des sections internes transversales différentes le long de l'axe O. La portion 209a s'étend sur 9/10^{ème} de la longueur de l'organe depuis l'extrémité externe de l'organe en contact avec l'ouverture du boîtier et la portion 209b s'étend sur le reste de la longueur de l'organe depuis l'extrémité interne, opposée, de l'organe. En l'espèce, la portion 209b comporte, à l'extrémité axiale interne de l'orifice, une lèvre 210 faisant saillie radialement vers l'axe O de sorte que la portion 209a présente un rayon interne plus grand que celui de la portion 209b.

La portion 207a présente des moyens de fixation 211. Comme représenté sur les figures 26 et 27, ces moyens de fixation comprennent une rainure 212a dont la section transversale a une forme générale en « U » apte à épouser un bord 212b de l'ouverture de la paroi. Cette rainure 212a est ménagée sur la face externe 208b, sensiblement au milieu de la portion 207a le long de l'axe O.

En outre, chaque organe 48a-d comprend un film d'étanchéité 214 s'étendant dans l'orifice 208 dans la portion 207a. Ce film s'étend dans un plan transversal non parallèle à l'axe O à l'extrémité axiale externe de l'organe. En l'espèce, ce plan est sensiblement perpendiculaire à l'axe O. De préférence, le film 214 est prédécoupé.

En variante, et comme représenté à la figure 2, l'organe d'étanchéité 48a-d comprend un prolongement partiel 215 s'étendant parallèlement à l'axe O, à partir de la portion large 207a en sens opposé à la portion 207b. Ce prolongement 215 a la forme d'une patte et permet de supporter le câble avant son passage dans l'organe. Il facilite aussi la préhension de l'organe par l'opérateur.

Afin d'assurer une bonne étanchéité du boîtier, ce dernier comprend des moyens de serrage 217 de l'organe 48a-d à distance de l'ouverture 28a-d en vue d'assurer un bon contact avec le câble. Sur la figure 24, ces moyens de serrage 217 sont situés à l'intérieur du boîtier 16. Les moyens de serrage 217 comprennent deux parties 216 et 218 mobiles l'une part rapport à l'autre. La partie 216 est d'une seule pièce avec le fond 30 du boîtier alors que la partie 218 est rapportée de façon amovible à ce fond. Comme représenté sur les figures 24 et 25, la partie rapportée 218 a une forme générale de pont comportant trois arches 217a-c séparées entre elles par des piliers 218a-d. La partie 218 comprend, entre les arches des paires d'arches 217a, 217b et 217b, 217c, un orifice 220b, 220c de forme générale cylindrique ménagée dans chaque pilier 218b et 218c. Les piliers d'extrémité 218a et 218d sont prolongés par des plots 220a et 220d. Cette partie 218 forme une pièce de serrage commune aux organes 48a-c. La partie 216 présente une forme complémentaire de la partie 218, à savoir une forme générale de pont comportant trois arches séparées entre elles par des piliers. La partie 216 comprend, entre les arches des deux paires d'arches, deux orifices de forme générale cylindrique destinés à recevoir, conjointement avec les orifices 220b et 220c, deux vis permettant de fixer les parties 216, 218 au boîtier. Les piliers situés aux extrémités du pont présentent des orifices destinés à recevoir les plots 220a et 220d de la partie 218. Ainsi, les parties 218, 220 forment trois surfaces internes cylindriques fermées de serrage des organes sur le câble.

Les boîtiers 16, 18 selon le premier mode de réalisation de l'invention permettent de mettre en oeuvre un procédé d'installation dont on va décrire les principaux aspects liés à l'invention.

Lors de l'installation de l'ensemble 14 dans l'immeuble 10, on fixe le premier boîtier 16 ou boîtier inférieur sur un support, par exemple une paroi de l'immeuble au moyen de vis que l'on fait passer dans les orifices 52a, 52b1 et 52b2. Puis, on positionne l'organe 48a dans l'ouverture 46a de la paroi 28a au contact de cette paroi grâce à la rainure 212b. Puis, on fait passer le câble d'adduction 13 dans l'orifice 208 de l'organe d'étanchéité 48a. En variante, on fait d'abord passer le câble d'adduction 13 dans l'orifice 208 de l'organe d'étanchéité 48a, puis on positionne l'organe 48a dans l'ouverture 46a de la paroi 28a au contact de cette paroi grâce à la rainure 212b. Ensuite, dans les deux cas, on serre, à distance de l'ouverture, l'organe 48a au contact du câble 13 avec les moyens de serrage 217. Précisément, on met en place la partie 218 de sorte que les arches viennent en regard des arches de la partie fixe 216. La portion étroite 207b se trouve ainsi emprisonnée entre l'arche 217a de la partie 218 et l'arche en regard de la partie 216. On immobilise ensuite la partie 218 en installant les vis dans les orifices 220b et 220c et en les serrant. Bien entendu, si d'autres câbles doivent occuper les ouvertures 46b et 46c, on les installe avant la mise en place des moyens de serrage.

Dans le cas où le câble d'adduction est trop gros, on le divise en deux parties pouvant passer, par exemple, dans les ouvertures 46a et 46b, muni chacun d'organes 48a et 48b. Toutefois, en supposant ici que le câble 13 comprend un nombre de fibres optiques FO trop important pour que le raccordement soit effectué dans le seul boîtier 16, on divise cette fois dans le boîtier ces fibres optiques FO en deux faisceaux. Le premier faisceau est enroulé dans l'espace E1, passé au travers des ouvertures 140 correspondant aux cassettes 88, 90 du boîtier 16, puis lové sur les cassettes 88, 90. Le deuxième faisceau est associé au deuxième boîtier comme indiqué plus bas.

Puis, le deuxième boîtier 18 est installé sur le premier. Avant ou après cette étape, on repère le câble d'immeuble et on fait passer ses fibres FO par les ouvertures avant 46a et 46b du boîtier 18, muni chacun d'organes 48a, et 48b. La mise en place et le serrage ont lieu comme expliqué plus haut concernant le boîtier 16.

Puis on positionne l'ensemble 14 dans la position ouverte comme illustré aux figures 9 et 10. Le verrou 134 permet d'immobiliser les boîtiers 16 et 18 dans cette position.

On libère alors l'orifice 130 du fond du deuxième boîtier en retirant l'opercule 133 et on fait passer un premier faisceau de fibres FO du câble d'immeuble 15 par cet orifice 130 depuis le deuxième boîtier jusqu'au premier boîtier.

Puis, on raccorde le premier faisceau du câble d'immeuble 15 au premier faisceau du câble d'adduction 13, fibre à fibre, sur les supports d'épissures 178 des cassettes 88, 90 du boîtier inférieur 16.

On enroule le deuxième faisceau du câble d'adduction 13 dans l'espace E2 du boîtier inférieur 16 ou premier boîtier. Puis on le fait passer au travers de l'ouverture 140 de ce boîtier, à travers l'orifice 130 du fond du boîtier supérieur, puis à travers l'ouverture 140 de ce boîtier. Enfin, on raccorde les fibres FO du deuxième faisceau du câble d'adduction 13 aux fibres FO du deuxième faisceau du câble d'immeuble 15, fibre à fibre, dans ce deuxième boîtier.

On retire alors le verrou 134 pour positionner l'ensemble en position fermée. Pour ce faire, on obture l'ouverture 34 du boîtier inférieur 16 avec le fond 30 du boîtier supérieur 18. Puis, on obture l'ouverture 34 du boîtier supérieur 18 avec le couvercle 38.

Les boîtiers 16, 18 selon le premier mode de réalisation de l'invention permettent aussi de mettre en oeuvre un procédé de maintenance dont on va décrire les principales particularités liées à l'invention.

Un installateur retire le couvercle 38 et effectue des opérations de maintenance dans le boîtier supérieur 18, au besoin en soulevant la cassette. Une fois celles-ci effectuées, il déplace le boîtier supérieur 18 par rapport au boîtier inférieur 16 grâce aux moyens d'articulation 54, faisant ainsi passer l'ensemble 14 de sa position fermée à sa position ouverte. L'installateur effectue alors les opérations de maintenance dans le boîtier inférieur 16, au besoin en soulevant la ou les cassettes.

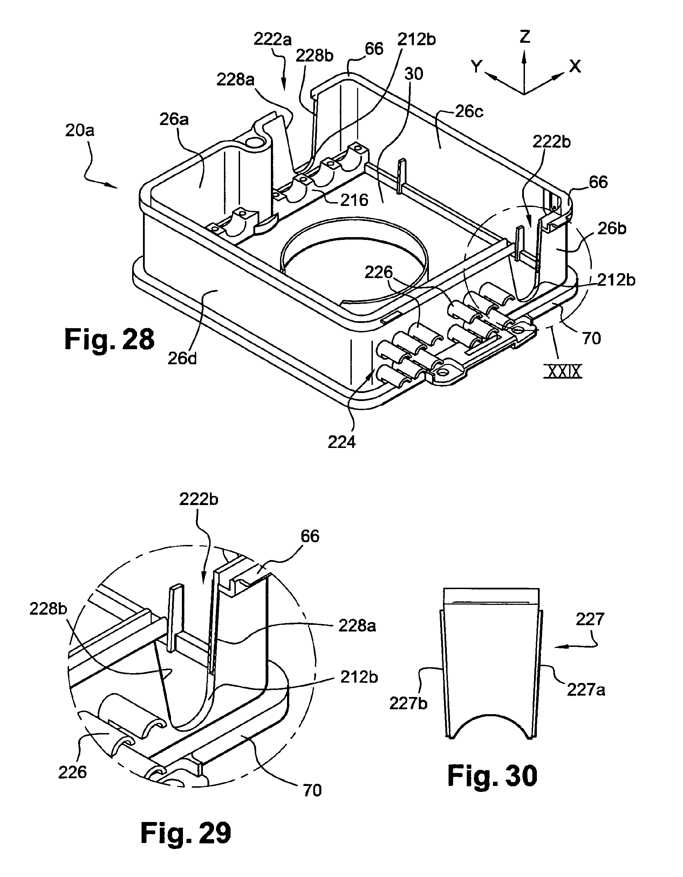

On a représenté sur les figures 28 et 29, le boîtier 20a selon le second mode de réalisation de l'invention. Ce boîtier est identique aux boîtiers 20b-d. Sur les figures 28, 29, les éléments analogues à ceux représentés sur les figures précédentes sont désignés par des références identiques.

A la différence du boîtier 16, le boîtier 20a comprend sur chacune des parois avant 28a et arrière 28b, une ouverture 222a et 222b d'entrée et de sortie de câble. En outre, ces ouvertures présentent une forme générale de « U » débouchant au bord supérieur 66. L'ouverture avant 222a est située en regard d'une arche de la partie 216 de façon qu'un câble passant par l'ouverture 222a puisse être enserrée entre les parties 216 et 218. La paroi arrière 28b comportent également des orifices 224 de sorties d'un câble à fibre optique munie d'organes d'étanchéité 226 analogue aux organes d'étanchéité représentés à la figure 2. Afin d'obturer chaque ouverture 222a, 222b, un coulisseau 227 représenté à la figure 30, présente une forme complémentaire de celle de l'orifice muni du câble 15. Ce coulisseau présente deux bords 227a et 227b aptes à coulisser dans des glissières complémentaires 228a, 228b ménagées dans chaque paroi 28a et 28b.

Dans ce mode de réalisation et comme représenté à la figure 1, le boîtier 20a permet de faire traverser le câble 15 à fibres optiques dans le boîtier 20a en dérivant du câble 15 certaines de ses fibres optiques FO vers les habitations 10a1, 10a2. Ces fibres FO passent alors dans les orifices 224. Le reste du câble est ensuite dirigé vers le palier suivant. Le câble 15 peut également pénétrer dans le boîtier par l'ouverture 222a sans ressortir par l'ouverture 222b, comme représenté au niveau du palier 11 d sur la figure 1.

Le boîtier 20a selon le deuxième mode de réalisation de l'invention permet de mettre en oeuvre un procédé d'installation dont on va décrire les principaux aspects liés à l'invention.

A l'arrivée sur le premier palier, le câble d'immeuble 15 comprend au moins 8 fibres optiques destinées aux habitations 10a1, 10a2, 10b1, 10b2, 10c1, 10c2, 10d1, 10d2. On fixe le boîtier 20a sur un support. On retire le coulisseau 227 de chacune des parois 28a, 28b du boîtier 20a. On positionne l'organe au contact de la paroi 28a dans l'ouverture 222a. Puis, on replace le coulisseau correspondant au contact de l'organe d'étanchéité. Ensuite, on fait passer le câble d'immeuble 15 dans l'orifice de l'organe. Dans le boîtier, on dérive du câble 15 les deux fibres FO destinées aux habitations 10a1 et 10a2. On fait sortir ces fibres FO par deux orifices 224 munis chacun de l'organe d'étanchéité 226. On positionne un autre organe d'étanchéité au contact de la paroi 28b dans l'ouverture 222b. Cet autre organe d'étanchéité pourra être un des organes 48a-f, ou en variante, un des organes 48a-f dépourvu de la portion 207b. Puis, on fait sortir du boîtier le câble 15 avec les fibres qui lui restent par l'orifice de cet organe et on replace le coulisseau correspondant au contact de l'organe d'étanchéité.

L'invention ne se limite pas aux modes de réalisation précédemment décrits.

En effet, le boîtier pourra présenter des tailles variées. A titre d'exemple d'ordre de grandeur, les dimensions du boîtier pourront prendre des valeurs allant du décimètre au mètre.

De plus, le boîtier selon l'invention pourra présenter une forme générale cylindrique, ovoïde ou autre sans pour cela sortir du cadre de l'invention.

En outre, on notera que les caractéristiques :
- du support d'épissures 178,
- de l'entretoise 120,
- de la cassette 88,
- de l'ensemble 14,
   décrites ci-dessus peuvent être mises en oeuvres indépendamment les unes des autres et indépendamment du fait que le boîtier comprend :
   - une paroi présentant au moins une ouverture ;
   - un organe présentant un orifice pour le passage d'un câble à fibre optique, l'organe étant apte à être reçu dans l'ouverture en assurant un contact avec la paroi, et
   - des moyens de serrage de l'organe à distance de l'ouverture en vue d'assurer un contact avec le câble.

## Revendications

1. Un organe d'étanchéité (48a) apte à être reçu dans une ouverture (46a) d'un boîtier (16, 18 ; 20a-d) de raccordement pour fibres optiques, ledit boîtier comprenant : une paroi (28a) présentant au moins une ouverture (46a) ; ledit organe d'étanchéité (48a) ; et des moyens de serrage (217) de l'organe d'étanchéité, à distance de l'ouverture, en vue d'assurer un contact avec le câble,
l'organe d'étanchéité étant un organe en matière élastique apte à être reçu dans ladite ouverture du boîtier en assurant un contact avec ladite paroi,
l'organe d'étanchéité présentant un orifice (208) pour le passage d'un câble (13, 15) à fibre optique selon un axe (O),
l'organe d'étanchéité étant **caractérisé en ce qu'**il comprend un film d'étanchéité (214) s'étendant dans ledit orifice (208), dans un plan transversal non parallèle à l'axe (O) de l'orifice,
de manière que le câble et l'organe d'étanchéité soient aptes à venir en contact par l'intermédiaire du film d'étanchéité, ce film étant apte à combler un éventuel espace entre le câble et l'organe d'étanchéité hors d'une région où un serrage est assuré par lesdits moyens de serrage du boîtier.

2. L'organe d'étanchéité de la revendication 1, dans lequel :
- l'organe d'étanchéité (48a) comprend au moins deux portions (207a, 207b) situées à des emplacements différents le long d'un axe de l'orifice et présentant des sections externes différentes, la portion (207a) de section externe la plus grande étant apte à venir en contact avec ladite paroi (28a) du boîtier, et
- le film d'étanchéité s'étend dans l'orifice dans la portion (207a) de section externe la plus grande.

3. L'organe d'étanchéité de la revendication 1, dans lequel le film d'étanchéité s'étend dans un plan perpendiculaire à l'axe (O) de l'orifice.

4. L'organe d'étanchéité de la revendication 1, dans lequel le film d'étanchéité est prédécoupé ou perforé en son centre, de manière à faciliter le passage dudit câble dans l'orifice.

5. L'organe d'étanchéité de la revendication 1, dans lequel l'organe d'étanchéité (48a) est en une matière thermoplastique comprenant au moins l'une des matières du groupe constitué par un thermoplastique élastomère, un thermoplastique polyuréthanne et un silicone.

6. Un boîtier (16, 18 ; 20a-d) de raccordement pour fibres optiques, comprenant :
- une paroi (28a) présentant au moins une ouverture (46a) ;
- un organe d'étanchéité (48a) selon l'une des revendications 1 à 5, présentant un orifice (208) pour le passage d'un câble (13, 15) à fibre optique et comprenant un film d'étanchéité (214) s'étendant dans ledit orifice (208) dans un plan transversal non parallèle à l'axe (O) de l'orifice ; et
- des moyens de serrage (217) de l'organe d'étanchéité, à distance de l'ouverture, en vue d'assurer un contact avec le câble,
le câble et l'organe d'étanchéité étant en contact par l'intermédiaire du film d'étanchéité, ce film étant apte à combler un éventuel espace entre le câble et l'organe d'étanchéité hors d'une région où un serrage est assuré par les moyens de serrage.

## Claims

1. Sealing member (48a) designed to be received in an opening (46a) in a connection box (16, 18; 20a-d) for optical fibres, the said box comprising: a wall (28a) having at least one opening (46a); the said sealing member (48a); and means (217) for clamping the sealing member, at a distance from the opening, in order to form a contact with the cable, the sealing member being a member made of elastic material and designed to be received in the said opening in the box while forming a contact with the said wall, the sealing member having an orifice (208) for the passage of a fibre optic cable (13, 15) along an axis (0), the sealing member being **characterized in that** it comprises a sealing film (214) extending in the said orifice (208) in a transverse plane which is not parallel to the axis (0) of the orifice, such that the cable and the sealing member are able to come into contact via the sealing film, this film being designed to fill any space between the cable and the sealing member outside a region where clamping is provided by the said clamping means of the box.

2. Sealing member of Claim 1, in which:
- the sealing member (48a) comprises at least two portions (207a, 207b) situated at different locations along an axis of the orifice and having different outer cross sections, the portion (207a) of larger outer cross section being able to come into contact with the said wall (28a) of the box, and
- the sealing film extends in the orifice in the portion (207a) of larger outer cross section.

3. Sealing member of Claim 1, in which the sealing film extends in a plane perpendicular to the axis (0) of the orifice.

4. Sealing member of Claim 1, in which the sealing film is pre-cut or perforated at its centre so as to facilitate the passage of the said cable into the orifice.

5. Sealing member of Claim 1, in which the sealing member (48a) is made of a thermoplastic material comprising at least one of the materials from the group consisting of a thermoplastic elastomer, a thermoplastic polyurethane and a silicone.

6. Connection box (16, 18; 20a-d) for optical fibres, comprising:
- a wall (28a) having at least one opening (46a);
- a sealing member (48a) according to one of Claims 1 to 5, having an orifice (208) for the passage of a fibre optic cable (13, 15) and comprising a sealing film (214) extending in the said orifice (208) in a transverse plane which is not parallel to the axis (0) of the orifice; and
- means (217) for clamping the sealing member, at a distance from the opening, in order to form a contact with the cable,
the cable and the sealing member being in contact via the sealing film, this film being designed to fill any space between the cable and the sealing member outside a region where clamping is provided by the clamping means.

## Patentansprüche

1. Dichtungsbauteil (48a), das in einer Öffnung (46a) eines Anschlussgehäuses (16, 18; 20a-d) für Lichtleitfasern aufgenommen werden kann, wobei das Gehäuse Folgendes enthält: eine Wand (28a), die mindestens eine Öffnung (46a) aufweist; das Dichtungsbauteil (48a); und Klemmeinrichtungen (217) des Dichtungsbauteils in Abstand zur Öffnung, um einen Kontakt mit dem Kabel zu gewährleisten,
wobei das Dichtungsbauteil ein Bauteil aus elastischem Material ist, das in der Öffnung des Gehäuses aufgenommen werden kann, indem es einen Kontakt mit der Wand gewährleistet,
wobei das Dichtungsbauteil ein Loch (208) für den Durchgang eines Lichtleitfaserkabels (13, 15) gemäß einer Achse (0) aufweist,
wobei das Dichtungsbauteil **dadurch gekennzeichnet ist, dass** es eine Dichtungsfolie (214) enthält, die sich in dem Loch (208) in einer Querebene nicht parallel zur Achse (0) des Lochs erstreckt, damit das Kabel und das Dichtungsbauteil mit Hilfe der Dichtungsfolie in Kontakt kommen können, wobei diese Folie einen möglichen Zwischenraum zwischen dem Kabel und dem Dichtungsbauteil außerhalb eines Bereichs ausfüllen kann, in dem ein Klemmen durch die Klemmeinrichtungen des Gehäuses gewährleistet ist.

2. Dichtungsbauteil nach Anspruch 1, bei dem:
- das Dichtungsbauteil (48a) mindestens zwei Abschnitte (207a, 207b) enthält, die sich an unterschiedlichen Stellen entlang einer Achse des Lochs befinden und unterschiedliche Außenquerschnitte haben, wobei der Abschnitt (207a) mit dem größeren Außenquerschnitt mit der Wand (28a) des Gehäuses in Kontakt kommen kann, und
- sich die Dichtungsfolie in dem Loch in dem Abschnitt (207a) mit größerem Außenquerschnitt erstreckt.

3. Dichtungsbauteil nach Anspruch 1, bei dem sich die Dichtungsfolie in einer Ebene lotrecht zur Achse (0) des Lochs erstreckt.

4. Dichtungsbauteil nach Anspruch 1, bei dem die Dichtungsfolie vorausgeschnitten oder in ihrer Mitte perforiert ist, um den Durchgang des Kabels durch das Loch zu erleichtern.

5. Dichtungsbauteil nach Anspruch 1, bei dem das Dichtungsbauteil (48a) aus einem thermoplastischen Stoff ist, der mindestens einen der Stoffe aus der Gruppe enthält, die aus einem Elastomer-Thermoplast, einem Polyurethan-Thermoplast und einem Silicon besteht.

6. Anschlussgehäuse (16, 18; 20a-d) für Lichtleitfasern, das Folgendes enthält:
- eine Wand (28a), die mindestens eine Öffnung (46a) aufweist;
- ein Dichtungsbauteil (48a) nach einem der Ansprüche 1 bis 5, das ein Loch (208) für den Durchgang eines Lichtleitfaserkabels (13, 15) aufweist und eine Dichtungsfolie (214) enthält, die sich in dem Loch (208) in einer Querebene nicht parallel zur Achse (0) des Lochs erstreckt; und
- Klemmeinrichtungen (217) des Dichtungsbauteils in Abstand zur Öffnung, um einen Kontakt mit dem Kabel zu gewährleisten,
wobei das Kabel und das Dichtungsbauteil mittels der Dichtungsfolie in Kontakt sind, wobei diese Folie einen möglichen Zwischenraum zwischen dem Kabel und dem Dichtungsbauteil außerhalb eines Bereichs ausfüllen kann, in dem ein Klemmen durch die Klemmeinrichtungen gewährleistet wird.
